# EUROPEAN PATENT SPECIFICATION

(11) **EP 3 885 943 B1**
(45) Date of publication and mention of the grant of the patent: **23.08.2023**
(21) Application number: 21161232.0
(22) Date of filing: 08.03.2021
(51) Int. Cl.: G06F 21/12, G06F 21/36, H04L 9/40

(54) **ELECTRONIC DEVICE, AND FUNCTION LIMIT CANCEL METHOD AND PROGRAM**
ELEKTRONISCHE VORRICHTUNG UND VERFAHREN UND PROGRAMM ZUR AUFHEBUNG DER FUNKTIONSBEGRENZUNG
DISPOSITIF ÉLECTRONIQUE ET PROCÉDÉ D'ANNULATION DE LIMITE DE FONCTION ET PROGRAMME

(30) Priority: 25.03.2020 JP 2020054096
(43) Date of publication of application: 29.09.2021
(73) Proprietor: Casio Computer Co., Ltd., Tokyo 151-8543 (JP)
(72) Inventor: KAMITANI, Saburo, Hamura-shi, Tokyo 205-8555 (JP)
(74) Representative: Grünecker Patent- und Rechtsanwälte PartG mbB

(56) References cited:
- US-A1- 2009 115 606
- US-A1- 2012 187 187
- US-A1- 2016 042 602
- US-A1- 2017 237 565

## Description

The present invention relates to an electronic calculator, and function limit cancel method and program.

Some electronic devices having a calculating function, such as desktop calculators, namely, electronic calculators, have a function limit mode. In the function limit mode, at least some of the functions of an electronic device, such as an electronic calculator, cannot be used. By using the function limit mode, an unfair use of an electronic device, for example, in an examination, is prevented. The electronic device having the function limit mode also has a function of canceling the function limit mode. For example, an electronic device that cancels the function limit mode through communications with a terminal, such as a smartphone, is known.

In Jpn. Pat. Appln. KOKAI Publication No. 2007-189375, a lock code to set an electronic device to a function limit mode and a cancel code to cancel the function limit mode are simultaneously generated. Therefore, if the cancel code is known when the device is set to the function limit mode, the function limit mode can be canceled even when it is desired that the functions be limited.

US 2017/237565 A1 relates to a system, wherein access to certain functions of a device is granted only after authorization. A password is generated and shared using the Diffie-Hellman key exchange method.

US 2012/0187187 A1 relates to communication between mobile devices and electronic devices using QR codes. A first device displays a QR code, which is scanned by a mobile device, which subsequently accesses a website for generating another QR code. Said QR code is presented to the first device in order to allow for access.

US 2016/0042602 A1 relates to relates to methods for allowing access to a target device. The target device displays a barcode, which is scanned by a user device. Based on information encoded by the barcode, a management server is accessed, which may allow access to the target device.

US 2009/0115606 A1 relates to an electronic calculator whose functions may be restricted. The restriction can be removed by entering a password.

The invention is defined by the independent claims. The dependent claims describe advantageous embodiments.

### BRIEF DESCRIPTION OF THE DRAWINGS

FIG. 1 is a diagram showing an example of a configuration of an electronic device system according to an embodiment of the present invention.
FIG. 2 is a flowchart showing an operation of an electronic device.
FIG. 3 is a flowchart showing an operation of a terminal device.
FIG. 4A is a diagram for explaining a specific example of an operation of an electronic device system.
FIG. 4B is a diagram for explaining a specific example of an operation of an electronic device system.
FIG. 4C is a diagram for explaining a specific example of an operation of an electronic device system.

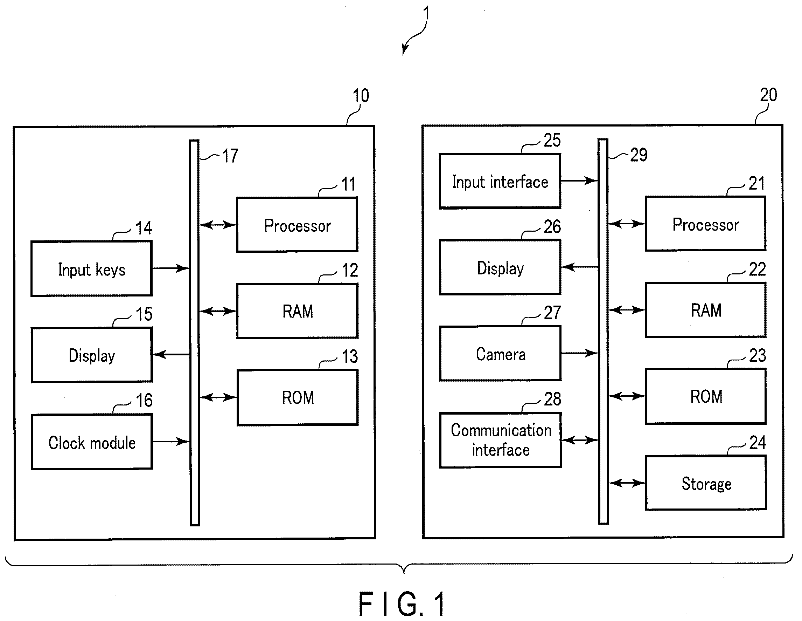

An embodiment of the present invention will be described with reference to the drawings. FIG. 1 is a diagram showing an example of a configuration of an electronic device system 1 according to the embodiment of the present invention. The electronic device system 1 includes an electronic device 10 and a terminal device 20. The electronic device 10 does not need to have a function of communicating with the terminal device 20.

The electronic device 10 is, for example, a desktop calculator. The electronic device 10 has calculating functions of four arithmetic operations, etc., as well as functional calculating functions. The electronic device 10 may also have a gadget function, such as a clock display function. The electronic device 10 includes a processor 11, a RAM 12, a ROM 13, input keys 14, a display 15, and a clock module 16. The processor 11, the RAM 12, the ROM 13, and the input keys 14, the display 15, and the clock module 16 are connected via a bus 17. The electronic device 10 is not limited to an electronic calculator but may be any electronic device having a function limit mode. The function limit mode is a mode in which at least some of the functions of the electronic device 10 are limited.

The processor 11 is a processor that controls various operations of the electronic device 10. The processor 11 may be a CPU, an ASIC, an FPGA, or the like. The processor 11 may be comprised of two or more processors. The processor 11 operates as a generation unit that generates a cancel code generation code. The processor 11 also operates as a determination unit that determines whether a cancel code, which is input after a cancel code generation code is generated, is generated based on the cancel code generation code. Furthermore, the processor 11 functions as a cancel unit that cancels the function limit mode when the input cancel code is generated based on the cancel code generation code.

The RAM 12 is a volatile memory. The RAM 12 is used as a working memory to temporarily store various data in the processor 11.

The ROM 13 is a non-volatile memory. The ROM 13 stores various programs, such as an electronic calculator control program to execute various calculating functions, a clock display program, and the like. The electronic calculator control program of the embodiment includes a function limit cancel program. The function limit cancel program is a control program to cancel the function limit mode.

The input keys 14 are various keys which a user uses to operate the electronic device 10. If the electronic device 10 is an electronic calculator, the input keys 14 include keys necessary for input concerning calculating functions, such as numeric input keys, operator input keys, an equal key, and the like. Further, the input keys 14 may include mode keys to utilize various gadget functions, such as a clock key. When an input operation using the input keys 14 is accepted, an input signal corresponding to the input operation is transmitted to the processor 11.

The display 15 is, for example, a liquid crystal display. The display 15 carries out various displays relating to the electronic calculator functions. The display 15 also carries out display corresponding to various gadgets, such as a display of a time.

The clock module 16 includes a counter circuit that counts seconds, minutes, hours, day, month, and year of the current time. The clock module 16 outputs a time count signal representing the year, month, day, hours, minutes, and seconds to the CPU 10.

The terminal device 20 is a terminal device, such as a smartphone, a tablet terminal, a personal computer (PC), and the like. The terminal device 20 includes a processor 21, a RAM 22, a ROM 23, a storage 24, an input interface 25, a display 26, a camera 27, and a communication interface 28. The processor 21, the RAM 22, the ROM 23, the storage 24, the input interface 25, the display 26, the camera 27, and the communication interface 28 are connected via a bus 29.

The processor 21 is a processor that controls various operations of the terminal device 20. The processor 21 may be a CPU, an ASIC, an FPGA, or the like. The processor 21 may be constructed of two or more processors. The processor 21 operates as a generation unit that generates a cancel code based on the cancel code generation code.

The RAM 22 is a volatile memory. The RAM 22 is used as a working memory to temporarily store various data in the processor 21.

The ROM 23 is a non-volatile memory. The ROM 23 stores a start-up program, etc. for the terminal device 20.

The storage 24 is a storage device, such as a semiconductor memory, a hard disk drive, or a solid state drive. The storage 24 stores various programs, such as control programs, parameters, etc., for the terminal device 20. The storage 24 stores a function limit cancel program that works in cooperation with the function limit cancel program of the electronic device 10. The function limit cancel program may be stored as application software of the terminal device 20.

The input interface 25 includes various interface items that are used by the user to operate the terminal device 20. The input interface 25 includes a touch panel, a keyboard, a mouse, etc.

The display 26 is, for example, a liquid crystal display. The display 26 displays various screens relating to the terminal device 20.

The camera 27 includes a lens and an image sensor. The camera 27 images an object, and acquires an image relating to the object.

The communication interface 28 is an interface through which the terminal device 20 can communicate with an external server or the like via a network. The communication interface 28 may be configured to support wireless or wired communications.

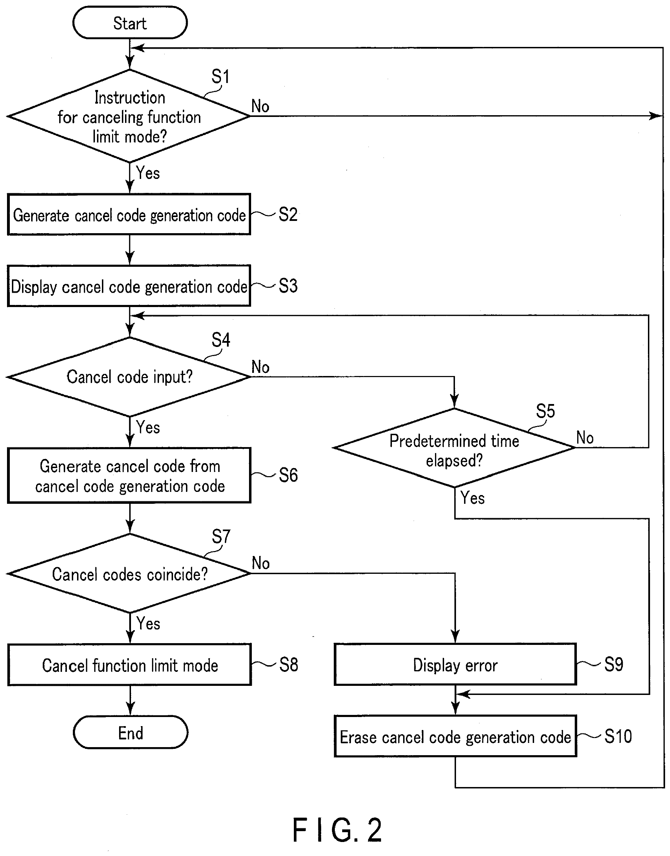

An operation of the electronic device system 1 will now be described. FIG. 2 is a flowchart showing an operation of the electronic device 10. The operation shown in FIG. 2 is an operation performed after the electronic device 10 is set to the function limit mode. The function limit mode is set, for example, when the user performs a specific key operation. Operations of the electronic device that is not set to the function limit mode are not particularly limited. For example, the electronic device 10 displays a calculation result on the display 15 or performs a gadget function, such as a clock, in accordance with the key operation of the user.

In step S1, the processor 11 determines whether an instruction for canceling the function limit mode has been received. The instruction for canceling the function limit mode is, for example, a specific key operation by the user. Until the instruction for canceling the function limit mode is received in step S1, the processor 11 stands by for processing. In step S1, if the instruction for canceling the function limit mode is received, the processing proceeds to step S2.

In step S2, the processor 11 generates a cancel code generation code. The cancel code generation code is a unique code including information for generating a code to cancel the function limit mode in the terminal device 20. The cancel code generation code is generated by converting time-varying data with a first algorithm. The time-varying data includes internal parameters of the electronic device 10, such as a value of an internal counter of the processor 11, a current time counted by the clock module 16, numerical data indicative of a setup state of the electronic device 10 stored in the RAM 22, and numerical data stored in a specific address of the RAM 22. The time-varying data also includes data of a movement state or the like of the electronic device 10. The time-varying data may also be obtained from a device other than the electronic device 10. Furthermore, to generate the cancel code generation code, a serial number or the like of the electronic device 10 may be used in combination. The first algorithm is an algorithm that generates a two-dimensional code including a unique URL character string from, for example, an internal parameter of the electronic device 10. The URL includes a character string that, for example, specifies a unique parameter to generate a cancel code on a server. The first algorithm may be, for example, a conversion using a hash function. The first algorithm is not particularly limited, as long as it can generate unique data that is generated based on an internal parameter or the like of the electronic device 10 and that can be recognized by the terminal device 20.

In step S3, the processor 11 causes the display 15 to display the generated cancel code generation code. The cancel code generation code displayed on the display 15 is read by the terminal device 20, as will be described later. The terminal device 20 generates a cancel code. Thus, the user can obtain the cancel code. Thereafter, the user inputs the cancel code by operating the electronic device 10.

In step S4, the processor 11 determines whether the cancel code is input. The input of the cancel code is determined depending on whether, for example, a numeral input key is operated. In step S4, if the processor 11 determines that the cancel code is not input, the processing proceeds to step S5. In step S4, if the processor 11 determines that the cancel code is input, the processing proceeds to step S6.

In step S5, the processor 11 determines whether a predetermined time has elapsed since the cancel code generation code was displayed. The predetermined time is an appropriately determined time, for example, one minute, five minutes, or the like. In step S5, if the processor determines that the predetermined time has not elapsed since the cancel code generation code was displayed, the processing returns to step S4. In this case, the standby state for a cancel code is continued. In step S5, if the processor determines that the predetermined time has elapsed since the cancel code generation code was displayed, the processing proceeds to step S10.

In step S6, the processor 11 generates a cancel code from the cancel code generation code. The cancel code is a numeric string generated by converting the cancel code generation code with a second algorithm. The second algorithm is an algorithm that generates a cancel code from a unique parameter specified by the cancel code generation code. The second algorithm is not particularly limited. Although the cancel code is described as a numeric string, if the electronic device 10 is configured to input a character string other than a numeric string, the cancel code may be other than a numeric string.

In step S7, the processor 11 determines whether the input cancel code coincides with the generated cancel code. By determining whether the input cancel code coincides with the generated cancel code, the processor 11 determines whether the input cancel code has been generated in accordance with the second algorithm. In step S7, if the input cancel code coincides with the generated cancel code, the processing proceeds to step S8. In step S7, if the input cancel code does not coincide with the generated cancel code, the processing proceeds to step S9.

In step S8, the processor 11 cancels the function limit mode. Then, the processor 11 ends the processing of FIG. 2. From this time, the electronic device 10 can be operated freely.

In step S9, the processor 11 causes the display 15 to perform an error display. The error display is a display to notify the user that, for example, the input cancel code is erroneous.

If the predetermined time has elapsed while the cancel code is not input in step S5 or if it is determined that the input cancel code and the generated cancel code do not coincide in step S7, the processor erases the cancel code generation code in step S10. Then, the processing returns to step S1. In this case, the user restarts the operation of canceling the function limit mode from the beginning. In the example shown in FIG. 2, the cancel code generation code is erased when an input error of the cancel code occurs only once. However, the cancel code generation code may be erased when input errors of the cancel code occur a plurality of times, or the cancel code generation code may not be erased even when an input error of the cancel code occurs.

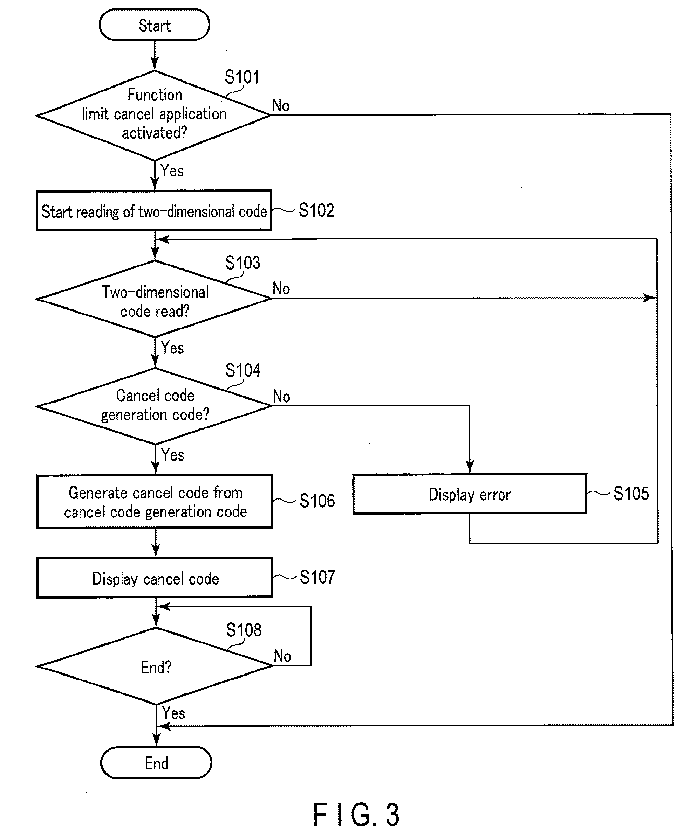

FIG. 3 is a flowchart showing an operation of the terminal device 20. In step S101, the processor 21 determines whether a function limit cancel application is activated. For example, when the user selects an icon of the function limit cancel application, the processor 21 determines that the function limit cancel application is activated. In step S101, if it is determined that the function limit cancel application is not activated, the terminal device 20 ends the processing. In this case, the terminal device 20 can execute processing other than the function limit cancel application. In step S101, if it is determined that the function limit cancel application is activated, the processing proceeds to step S102.

In step S102, the processor 21 starts reading of a two-dimensional code. For example, the processor 21 starts up the camera 27, while a two-dimensional code reading frame is being displayed in, for example, a central portion of the display 26.

In step S103, the processor 21 determines whether a two-dimensional code has been read. For example, when a two-dimensional code is seen in an image in the reading frame, the processor 21 determines that the two-dimensional code has been read. Until determining that the two-dimensional code has been read in step S103, the processor 21 stands by for processing. If the processor 21 determines that the two-dimensional code has been read in step S103, the processing proceeds to step S104.

In step S104, the processor 21 determines whether the read two-dimensional code is a cancel code generation code. In step S104, if the read two-dimensional code is not a cancel code generation code, the processing proceeds to step S105. In step S104, if the read two-dimensional code is a cancel code generation code, the processing proceeds to step S106.

In step S105, the processor 21 causes the display 26 to perform an error display. The error display is a display to notify the user that, for example, the read two-dimensional code is not a cancel code generation code. Then, the processing returns to step S103.

In step S106, the processor 21 generates a cancel code from the cancel code generation code. For example, the processor 21 accesses the server based on a URL specified by the cancel code generation code, and acquires a unique parameter. The processor 21 generates a cancel code by converting the unique parameter with the second algorithm. The second algorithm is identical to the second algorithm used to generate the cancel code in the electronic device 10. The cancel code need not be generated in the terminal device 20. For example, the terminal device 20 may transmit the unique parameter acquired based on the cancel code generation code to the external server outside the terminal device 20, and the server may generate a cancel code by converting the unique parameter with the second algorithm.

In step S107, the processor 21 causes the display 26 to display the cancel code.

In step S108, the processor 21 determines whether the function limit cancel application should be ended. For example, if the user performs a specific operation to end the function limit cancel application or when a predetermined time has elapsed since the operation, it is determined that the function limit cancel application should be ended. In step S108, if it is determined that the function limit cancel application should not be ended, the processor 21 stands by for processing. In step S108, if it is determined that the function limit cancel application should be ended, the processor 21 ends the processing of FIG. 3.

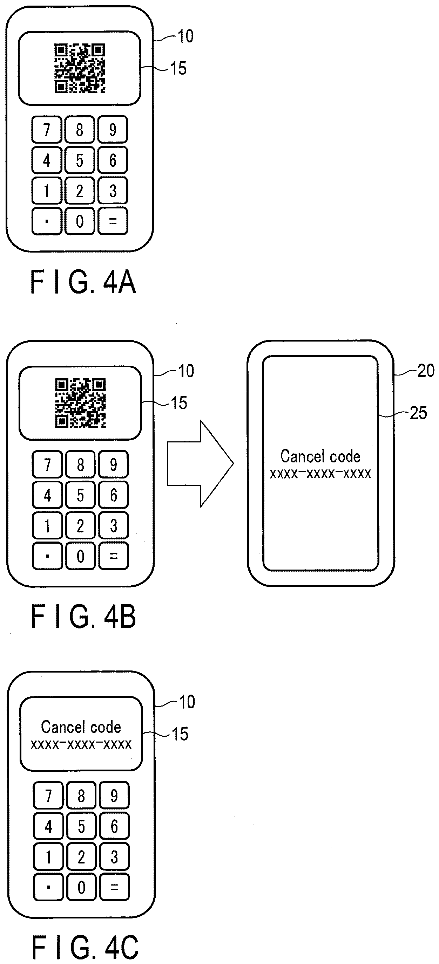

FIG. 4A, FIG. 4B, and FIG. 4C are diagrams for explaining specific examples of operations of the electronic device system 1 explained with reference to FIG. 2 and FIG. 3. When the electronic device 10 receives an instruction for canceling the function limit mode, a cancel code generation code is generated by converting an internal parameter of the electronic device 10 with the first algorithm. Then, as shown in FIG. 4A, the cancel code generation code is displayed on the display 15 of the electronic device 10.

In the state in which the cancel code generation code is displayed on the display 15 of the electronic device 10, the terminal device 20 reads the cancel code generation code. As a result, the terminal device 20 generates a cancel code by converting the unique parameter acquired from the cancel code generation code with the second algorithm. Then, as shown in FIG. 4B, the cancel code is displayed on the display 20 of the terminal device 20. The cancel code is, for example, a numeric string of 12 digits.

The user inputs the cancel code displayed on the display 26 of the terminal device 20 to the electronic device 10. If the input cancel code is correct, the function limit mode of the electronic device 10 is canceled. In the electronic device 10, the cancel code is generated from the cancel code generation code in accordance with the second algorithm identical to that in the terminal device 20. Thus, the electronic device 10 and the terminal device 20 share the second algorithm. As a result, the electronic device 10 can determine whether the input cancel code is correct without communicating with the terminal device 20.

According to the embodiment described above, the cancel code is generated independently of the setting of the function limit mode. In other words, in the present embodiment, the function limit cancel application is activated and the cancel code is generated at a timing when the function limit mode may be canceled; for example, after an examination. Accordingly, the cancel code cannot be obtained when the function limit mode is set. Furthermore, according to the present embodiment, even if the electronic device 10 does not have a communication function, the function limit mode of the electronic device 10 can be canceled through orrespondence by the terminal device 20.

When canceling the function limit mode, the cancel code generation code, not the cancel code, is presented by the electronic device 10 to the user. Thus, the function limit mode cannot be canceled by only using the electronic device 10. Furthermore, the cancel code generation code is a two-dimensional code including a URL. If an access to a server using the URL is necessary to acquire the unique parameter to generate the cancel code, the terminal device 20 needs to be connected to a network. Therefore, it is difficult to cancel the function limit mode of the electronic device 10, for example, an electronic calculator, during an examination. Moreover, the cancel code generation code is the unique code generated using the internal parameter of the electronic device 10 and erased after a predetermined time has elapsed. After the cancel code generation code is erased, cancel code authentication is carried out based on a cancel code generated from a newly generated cancel code generation code. In other words, a cancel code generation code and a cancel code that have been generated in advance cannot be used later. Therefore, it is still more difficult to cancel the function limit mode of the electronic device 10, for example, an electronic calculator, during an examination.

In the embodiment described above, the terminal device 20 acquires the cancel code generation code by reading the cancel code generation code displayed on the display 15 of the electronic device 10. If communication between the electronic device 10 and the terminal device 20 is possible, the terminal device 20 may acquire a cancel code generation code through the communication with the electronic device 10.

The present invention has been described based on the embodiment; however, the present invention is not limited to the embodiment described above. Needless to say, various modifications or applications can be made without departing from the spirit of the present invention.

The processes of the embodiment described above may also be stored as programs that can be executed by the processors 11 and 21, namely, computers. Alternatively, the programs may be stored and distributed in a storage medium of an external storage device, such as a magnetic disk, an optical disk, and a semiconductor memory. The processors 11 and 21 read the programs stored in the storage medium of the external storage device and operations thereof are controlled by the read programs, so that the processes described above can be executed.

## Claims

1. An electronic calculator (10) comprising at least one processor (11), **characterized in that** the processor (11) is configured to execute:
a generation process for generating a cancel code generation code, by converting time-varying data with a first algorithm, to cancel a function limit mode in which at least some of functions of the electronic device (10) are limited;
a generation process for generating a generated cancel code from the cancel code generation code by converting the cancel code generation code with a second algorithm;
an input process for inputting an input cancel code generated based on the cancel code generation code by converting the cancel code generation code with the second algorithm;
a determination process for determining whether the input cancel code input after generating the cancel code generation code coincides with the generated cancel code; and
a cancel process for canceling the function limit mode when the input cancel code coincides with the generated cancel code.

2. The electronic calculator (10) according to claim 1, wherein the time-varying data includes a value of an internal counter in the electronic device (10), a time counted by a clock module provided in the electronic device (10), or a numerical value indicative of a setup state of the electronic device (10).

3. The electronic calculator (10) according to claim 1 or 2, wherein the processor (11) is configured to erase, in the generation process, the cancel code generation code after a predetermined time has elapsed since the cancel code generation code was generated.

4. The electronic calculator (10) according to any one of claims 1 to 3, wherein the cancel code generation code is a two-dimensional code indicative of a URL.

5. A function limit cancel method executed by an electronic calculator (10), **characterized in that** the method comprises:
a generation step for generating a cancel code generation code, by converting time-varying data with a first algorithm, to cancel a function limit mode in which at least some of functions of the electronic device (10) are limited;
a generation step for generating a generated cancel code from the cancel code generation code by converting the cancel cod generation code with a second algorithm;
an input step for inputting an input cancel code generated based on the cancel code generation code by converting the cancel code generation code with the second algorithm;
a determination step for determining whether the input cancel code input after generating the cancel code generation code coincides with the generated cancel code; and
a cancel step for canceling the function limit mode when the input cancel code coincides with the generated cancel code.

6. The function limit cancel method according to claim 5, wherein the time-varying data includes a value of an internal counter in the electronic device (10), a time counted by a clock module provided in the electronic device (10), or a numerical value indicative of a setup state of the electronic device (10).

7. The function limit cancel method according to claim 5 or 6, wherein the generation step includes erasing the cancel code generation code after a predetermined time has elapsed since the cancel code generation code was generated.

8. The function limit cancel method according to any one of claims 5 to 7, wherein the cancel code generation code is a two-dimensional code indicative of a URL.

9. A program executable by a processor (11) of an electronic calculator (10), **characterized in that** the program causes the processor (11) to execute:
a generation process for generating a cancel code generation code, by converting time-varying data with a fist algorithm, to cancel a function limit mode in which at least some of functions of the electronic device (10) are limited;
a generation process for generating a generated cancel code from the cancel code generation code by converting the cancel code generation code with a second algorithm;
an input process for inputting an input cancel code generated based on the cancel code generation code by converting the cancel code generation code with the second algorithm;
a determination process for determining whether the input cancel code input after generating the cancel code generation code is generated coincides with the generated cancel code; and
a cancel process for canceling the function limit mode when the input cancel code coincides with the generated cancel code.

10. The program according to claim 9, wherein the time-varying data includes a value of an internal counter in the electronic device (10), a time counted by a clock module provided in the electronic device (10), or a numerical value indicative of a setup state of the electronic device (10).

11. The program according to claim 9 or 10, wherein the generation process includes erasing the cancel code generation code after a predetermined time has elapsed since the cancel code generation code was generated.

12. The program according to any one of claims 9 to 11, wherein the cancel code generation code is a two-dimensional code indicative of a URL.

## Patentansprüche

1. Elektronisches Rechengerät (10) mit wenigstens einem Prozessor (11), **dadurch gekennzeichnet, dass** der Prozessor (11) konfiguriert ist, um auszuführen:
einen Generierungsprozess zum Generieren eines Generierungscodes für einen Aufhebungscode durch Konvertieren von zeitveränderlichen Daten mit einem ersten Algorithmus, um einen Funktionsbegrenzungsmodus aufzuheben, in dem wenigstens einige der Funktionen der elektronischen Vorrichtung (10) begrenzt sind;
einen Generierungsprozess zum Generieren eines generierten Aufhebungscodes aus dem Generierungscode für den Aufhebungscode durch Konvertieren des Generierungscodes für den Aufhebungscode mit einem zweiten Algorithmus;
einen Eingabeprozess zum Eingeben eines Eingabeaufhebungscodes, der auf der Basis des Generierungscodes für den Aufhebungscode durch Konvertieren des Generierungscodes für den Aufhebungscode mit dem zweiten Algorithmus generiert wurde;
einen Bestimmungsprozess zum Bestimmen, ob der eingegebene Aufhebungscode, der nach dem Generieren des Generierungscodes für den Aufhebungscode eingegeben wurde, mit dem generierten Aufhebungscode übereinstimmt; und
einen Aufhebungsprozess zum Aufheben des Funktionsbegrenzungsmodus, wenn der eingegebene Aufhebungscode mit dem generierten Aufhebungscode übereinstimmt.

2. Elektronisches Rechengerät (10) nach Anspruch 1, wobei die zeitveränderlichen Daten einen Wert eines internen Zählers in der elektronischen Vorrichtung (10), eine von einem in der elektronischen Vorrichtung (10) bereitgestellten Taktmodul gezählte Zeit oder einen numerischen Wert aufweisen, der einen Einstellungszustand der elektronischen Vorrichtung (10) anzeigt.

3. Elektronisches Rechengerät (10) nach Anspruch 1 oder 2, wobei der Prozessor (11) konfiguriert ist, um in dem Generierungsprozess den Generierungscode für den Aufhebungscode zu löschen, nachdem eine vorgegebene Zeit abgelaufen ist, seit der Generierungscode für den Aufhebungscode generiert wurde.

4. Elektronisches Rechengerät (10) nach einem der Ansprüche 1 bis 3, wobei der Generierungscode für den Aufhebungscode ein zweidimensionaler Code ist, der eine URL anzeigt.

5. Verfahren zur Aufhebung der Funktionsbegrenzung, das von einem elektronischen Rechengerät (10) ausgeführt wird, **dadurch gekennzeichnet, dass** das Verfahren umfasst:
einen Generierungsschritt zum Generieren eines Generierungscodes für einen Aufhebungscode durch Konvertieren von zeitveränderlichen Daten mit einem ersten Algorithmus, um einen Funktionsbegrenzungsmodus aufzuheben, in dem wenigstens einige der Funktionen der elektronischen Vorrichtung (10) begrenzt sind;
einen Generierungsschritt zum Generieren eines generierten Aufhebungscodes aus dem Generierungscode für den Aufhebungscode durch Konvertieren des Generierungscodes für den Aufhebungscode mit einem zweiten Algorithmus;
einen Eingabeschritt zum Eingeben eines Eingabeaufhebungscodes, der auf der Basis des Generierungscodes für den Aufhebungscode durch Konvertieren des Generierungscodes für den Aufhebungscode mit dem zweiten Algorithmus generiert wurde;
einen Bestimmungsschritt zum Bestimmen, ob der eingegebene Aufhebungscode, der nach dem Generieren des Generierungscode für den Aufhebungscode eingegeben wurde, mit dem generierten Aufhebungscode übereinstimmt; und
einen Aufhebungsschritt zum Aufheben des Funktionsbegrenzungsmodus, wenn der eingegebene Aufhebungscode mit dem generierten Aufhebungscode übereinstimmt.

6. Verfahren zur Aufhebung der Funktionsbegrenzung nach Anspruch 5, wobei die zeitveränderlichen Daten einen Wert eines internen Zählers in der elektronischen Vorrichtung (10), eine von einem in der elektronischen Vorrichtung (10) bereitgestellten Taktmodul gezählte Zeit oder einen numerischen Wert aufweisen, der einen Einstellungszustand der elektronischen Vorrichtung (10) anzeigt.

7. Verfahren zur Aufhebung der Funktionsbegrenzung nach Anspruch 5 oder 6, wobei der Generierungsschritt das Löschen des Generierungscodes für den Aufhebungscode aufweist, nachdem eine vorgegebene Zeit abgelaufen ist, seit der Generierungscode für den Aufhebungscode generiert wurde.

8. Verfahren zur Aufhebung der Funktionsbegrenzung nach einem der Ansprüche 5 bis 7, wobei der Generierungscode für den Aufhebungscode ein zweidimensionaler Code ist, der eine URL anzeigt.

9. Programm, das von einem Prozessor (11) eines elektronischen Rechengeräts (10) ausführbar ist, **dadurch gekennzeichnet, dass** das Programm den Prozessor (11) auszuführen lässt:
einen Generierungsprozess zum Generieren eines Generierungscodes für einen Aufhebungscode durch Konvertieren von zeitveränderlichen Daten mit einem ersten Algorithmus, um einen Funktionsbegrenzungsmodus aufzuheben, in dem wenigstens einige der Funktionen der elektronischen Vorrichtung (10) begrenzt sind;
einen Generierungsprozess zum Generieren eines generierten Aufhebungscodes aus dem Generierungscode für den Aufhebungscode durch Konvertieren des Generierungscodes für den Aufhebungscode mit einem zweiten Algorithmus;
einen Eingabeprozess zum Eingeben eines Eingabeaufhebungscodes, der auf der Basis des Generierungscodes für den Aufhebungscode durch Konvertieren des Generierungscodes für den Aufhebungscode mit dem zweiten Algorithmus generiert wurde;
einen Bestimmungsprozess zum Bestimmen, ob der eingegebene Aufhebungscode, der nach dem Generieren des Generierungscodes für den Aufhebungscode eingegeben wurde, mit dem generierten Aufhebungscode übereinstimmt; und
einen Aufhebungsprozess zum Aufheben des Funktionsbegrenzungsmodus, wenn der eingegebene Aufhebungscode mit dem generierten Aufhebungscode übereinstimmt.

10. Programm nach Anspruch 9, wobei die zeitveränderlichen Daten einen Wert eines internen Zählers in der elektronischen Vorrichtung (10), eine von einem in der elektronischen Vorrichtung (10) bereitgestellten Taktmodul gezählte Zeit oder einen numerischen Wert aufweisen, der einen Einstellungszustand der elektronischen Vorrichtung (10) anzeigt.

11. Programm nach Anspruch 9 oder 10, wobei der Generierungsprozess das Löschen des Generierungscodes für den Aufhebungscode aufweist, nachdem eine vorgegebene Zeit abgelaufen ist, seit der Generierungscode für den Aufhebungscode generiert wurde.

12. Programm nach einem der Ansprüche 9 bis 11, wobei der Generierungscode für den Aufhebungscode ein zweidimensionaler Code ist, der eine URL anzeigt.

## Revendications

1. Calculateur électronique (10) comprenant au moins un processeur (11), **caractérisé en ce que** le processeur (11) est configuré pour exécuter :
un processus de génération pour générer un code d'annulation, en convertissant des données variables dans le temps avec un premier algorithme, pour annuler un mode de limitation de fonction dans lequel au moins certaines des fonctions du dispositif électronique (10) sont limitées ;
un processus de génération pour générer un code d'annulation à partir du code de génération de code d'annulation en convertissant le code de génération de code d'annulation à l'aide d'un deuxième algorithme ;
un processus d'entrée pour saisir un code d'annulation d'entrée généré sur la base du code de génération de code d'annulation en convertissant le code de génération de code d'annulation avec le deuxième algorithme ;
un processus de détermination pour déterminer si l'entrée du code d'annulation après la génération du code de génération de code d'annulation coïncide avec le code d'annulation généré ; et
un processus d'annulation pour annuler le mode de limitation de fonction lorsque l'entrée du code d'annulation coïncide avec le code d'annulation généré.

2. Calculateur électronique (10) selon la revendication 1, dans lequel les données variables dans le temps comprennent une valeur d'un compteur interne dans le dispositif électronique (10), un temps compté par un module d'horloge fourni dans le dispositif électronique (10), ou une valeur numérique indicative d'un état de configuration du dispositif électronique (10).

3. Calculateur électronique (10) selon la revendication 1 ou 2, dans lequel le processeur (11) est configuré pour effacer, dans le processus de génération, le code de génération d'annulation après qu'un temps prédéterminé s'est écoulé depuis la génération du code de génération d'annulation.

4. Calculateur électronique (10) selon l'une quelconque des revendications 1 à 3, dans lequel le code d'annulation est un code bidimensionnel indiquant un URL.

5. Procédé d'annulation de limite de fonction exécuté par un calculateur électronique (10), **caractérisé en ce que** le procédé comprend :
une étape de génération pour générer un code d'annulation, en convertissant des données variables dans le temps avec un premier algorithme, pour annuler un mode de limitation de fonction dans lequel au moins certaines des fonctions du dispositif électronique (10) sont limitées ;
une étape de génération pour générer un code d'annulation à partir du code de génération de code d'annulation en convertissant le code de génération de code d'annulation à l'aide d'un deuxième algorithme ;
une étape d'entrée pour saisir un code d'annulation d'entrée généré sur la base du code de génération de code d'annulation en convertissant le code de génération de code d'annulation avec le deuxième algorithme ;
une étape de détermination pour déterminer si l'entrée du code d'annulation après la génération du code de génération de code d'annulation coïncide avec le code d'annulation généré ; et
une étape d'annulation pour annuler le mode de limitation de fonction lorsque l'entrée du code d'annulation coïncide avec le code d'annulation généré.

6. Procédé d'annulation de limite de fonction selon la revendication 5, dans lequel les données variables dans le temps comprennent une valeur d'un compteur interne dans le dispositif électronique (10), un temps compté par un module d'horloge fourni dans le dispositif électronique (10), ou une valeur numérique indicative d'un état de configuration du dispositif électronique (10).

7. Procédé d'annulation de limite de fonction selon la revendication 5 ou 6, dans lequel l'étape de génération comprend l'effacement du code de génération d'annulation après qu'un temps prédéterminé s'est écoulé depuis la génération du code de génération d'annulation.

8. Procédé d'annulation de limite de fonction selon l'une des revendications 5 à 7, dans lequel le code d'annulation est un code bidimensionnel indiquant un URL.

9. Programme exécutable par un processeur (11) d'un calculateur électronique (10), **caractérisé en ce que** le programme amène le processeur (11) à exécuter :
un processus de génération pour générer un code d'annulation, en convertissant des données variables dans le temps avec un premier algorithme, pour annuler un mode de limitation de fonction dans lequel au moins certaines des fonctions du dispositif électronique (10) sont limitées ;
un processus de génération pour générer un code d'annulation à partir du code de génération de code d'annulation en convertissant le code de génération de code d'annulation à l'aide d'un deuxième algorithme ;
un processus d'entrée pour saisir un code d'annulation d'entrée généré sur la base du code de génération de code d'annulation en convertissant le code de génération de code d'annulation avec le deuxième algorithme ;
un processus de détermination pour déterminer si l'entrée du code d'annulation après la génération du code de génération de code d'annulation coïncide avec le code d'annulation généré ; et
un processus d'annulation pour annuler le mode de limitation de fonction lorsque l'entrée du code d'annulation coïncide avec le code d'annulation généré.

10. Programme selon la revendication 9, dans lequel les données variables dans le temps comprennent une valeur d'un compteur interne dans le dispositif électronique (10), un temps compté par un module d'horloge fourni dans le dispositif électronique (10), ou une valeur numérique indicative d'un état de configuration du dispositif électronique (10).

11. Procédé selon la revendication 9 ou 10, dans lequel le processus de génération comprend l'effacement du code de génération d'annulation après qu'un temps prédéterminé s'est écoulé depuis la génération du code de génération d'annulation.

12. Programme selon l'une des revendications 9 à 11, dans lequel le code d'annulation est un code bidimensionnel indiquant un URL.
